# EUROPEAN PATENT APPLICATION

(11) **EP 4 129 776 A1**
(43) Date of publication of application: **08.02.2023**
(21) Application number: 21781464.9
(22) Date of filing: 06.04.2021
(51) Int. Cl.: B60S 5/06, B60L 53/80

(54) **BATTERY SWAPPING METHOD**

(30) Priority: 03.04.2020 CN 202010262662
(71) Applicant: Aulton New Energy Automotive Technology Group, Guangzhou, Guangdong 510700 (CN); Shanghai Dianba New Energy Technology Co., Ltd., Shanghai 201308 (CN)
(72) Inventor: ZHANG, Jianping, Shanghai 201306 (CN); HUANG, Chunhua, Shanghai 201306 (CN)
(74) Representative: Bittner, Bernhard
(86) International application number: PCT/CN2021/085674
(87) International publication number: WO 2021/197497

(57) **Abstract**

A battery swapping method, comprising: taking out a battery pack having insufficient electricity from an electric vehicle and placing the battery pack at a first position; overturning the taken-out battery pack having insufficient electricity to a second position from the first position in a first direction; putting the battery pack insufficient electricity located at the second position into a charging compartment for charging and/or taking out a battery pack having full electricity from the charging compartment and placing the battery pack having full electricity at a third position, overturning the taken-out battery pack having full electricity to a forth position from the third position in a second direction; and putting the battery pack having full electricity located at the forth position into the electric vehicle. The battery swapping method uses a small space and structure to complete taking and placing of a large size battery pack in a charging station, thus simplify battery swapping process and increasing battery swapping speed, and achieves battery swapping of an electric vehicle using a single large battery pack in a case of a battery swapping station having a small occupied area, thereby reducing the cost of the battery pack and facilitating popularization.

## Description

The International Application claims priority to Chinese Patent Application CN2020102626621, filed on April 3, 2020, the contents of which are incorporated herein by reference in their entireties.

### Technical Field

The present disclosure relates to a battery swapping method.

### Background

At present, battery swapping of the electric vehicle field is mainly divided into two kinds of chassis battery swap and side battery swap, in side battery swap the battery pack is pulled out through the swapping device from the vehicle to be swapped, after the battery pack rotated 180 ° on the plane on the swapping device, so that the charging port from facing the vehicle to face the charging compartment, and then the battery is inserted into the charging compartment on the other side of the battery swapping device for charging. Due to the structural constraints of the vehicle itself, the prior arts of swapping on both sides is mostly used. Swapping on both sides requires the swap device to rotate the battery pack 180° on the device before it goes into the charging compartment for charging.

However, due to the need for rotating battery pack on a plane, the long strip of battery pack rotation requires a very large space, which will lead to the complex structure and large size of the swapping device, not only directly affect the manufacturing difficulty of the swap device, and increase the floor space of the swap station, so the electric vehicle can only use multiple small battery pack swap form, however, battery swapping method of multiple battery pack requires swapping on both sides, the battery swapping process is complex, and the battery swapping time is longer.

### Content of the present invention

The technical problem to be solved by the present invention is to provide a battery swapping method in order to overcome the defects of the prior arts in which the structure of the swapping device required by the battery swapping method is complex, resulting in a large manufacturing difficulty, a large floor space of the battery swapping station, and a complex and long process of battery swapping.

The present invention solves the above technical problems by means of the following technical solutions.

A battery swapping method, characterized in that the battery swapping method comprises:
Taking out an insufficient electricity battery pack from an electric vehicle and placing the battery pack at a first position;
overturning the taken-out insufficient electricity battery pack from the first position along a first direction to a second position ;
putting the insufficient electricity battery pack located at the second position into a charging compartment of a charging assembly for charging, and/or take out a full electricity battery pack from a charging compartment and place the battery pack at a third position;
overturning the taken-out full electricity battery pack from the third position along a second direction to a fourth position;
placing the full electricity battery pack located at the fourth position into the electric vehicle.

Wherein, the first position and the fourth position may be the same position, and the second position and the third position may be the same position. The overturning mechanism overturn therefore mainly between two positions.

The method of overturning is used to rotate the battery pack in this invention. The battery pack itself requires less space to overturn, and the overturning mechanism can be significantly reduced in structure compared to a planar rotating battery swapping device. As a result, the battery swapping method of the present invention is able to use a small space and structure to complete taking and placing of a large size battery pack in a charging station. The battery swapping process may be therefore simplified and the speed of battery swapping is increased. It also achieves battery swapping of an electric vehicle using a single large battery pack in a case of a battery swapping station having a small occupied area, thus reducing the cost of the battery pack and facilitating popularization.

Preferably, the battery swapping method realizes the overturning of the insufficient electricity battery pack or the full electricity battery pack by providing an overturning mechanism, wherein,

Taking out the insufficient electricity battery pack from the electric vehicle and placing it at the first position comprising: taking out the insufficient electricity battery pack from the electric vehicle and placing it at the first position on the overturning mechanism;

Or, taking out the full electricity battery pack from the charging compartment and placing it at the third position comprises: taking out the full electricity battery pack from the charging compartment and placing it at the third position of the overturning mechanism.

The overturning mechanism in the present invention rotates the battery pack in the form of overturning. The battery pack itself requires less space to overturn, and the overturning mechanism can be significantly reduced in structure compared to a planar rotating battery swapping device. As a result, the battery swapping device of the present invention is able to complete the taking and placing of larger battery packs in charging stations in a smaller space and structure. Therefore, battery swapping for electric vehicles using a single large battery pack can be achieved by a battery swapping station having a small occupied area, thus reducing the cost of the battery pack and facilitating popularization.

Preferably, the battery pack is taken and placed from the electric vehicle or the charging compartment by providing a battery taking and placing mechanism; wherein,
taking out the insufficient electricity battery pack from the electric vehicle at the first position comprising: controlling the battery taking and placing mechanism to remove the insufficient electricity battery pack from the electric vehicle and to place it at the first position on the overturning mechanism;
or, taking out the full electricity battery pack from the charging compartment and placing it at the third position comprises: controlling the battery taking and placing mechanism to remove the full electricity battery pack from the charging compartment and to place it at the third position of the overturning mechanism.

Preferably, by providing an extending mechanism on the overturning mechanism for taking and placing the battery pack on the electric vehicle or charging compartment; wherein,
taking out the insufficient electricity battery pack from the electric vehicle and placing it at the first position comprising: controlling the extending mechanism to extend towards the direction of the electric vehicle; controlling the extending mechanism to lift the insufficient electricity battery pack in the electric vehicle; and controlling the extending mechanism to draw back so that the insufficient electricity battery pack reaches the first position on the overturning mechanism;
or, taking out the full electricity battery pack from the charging compartment and placing it at the third position comprises: controlling the extending mechanism to extend towards the direction of the charging compartment; controlling the extending mechanism to lift the full electricity battery pack in the charging compartment and controlling the extending mechanism to draw back so that the full electricity battery pack reaches the third position on the overturning mechanism.

The extending mechanism can realize the battery pack transferring action by its own movement, which realizes the movement of the battery pack on the first overturning part and the second overturning part.

Before controlling the extending mechanism to extend towards the direction of the electric vehicle, it also includes the step of aligning with the battery pack on the electric vehicle/charging compartment. Wherein, a detection device such as a sensor or a mechanical structure that can realize guidance enables the extending mechanism to align with the battery pack in a space position before moving out towards the battery pack on the electric vehicle/charging compartment.

The battery taking and placing mechanism and the overturning mechanism can be the same or different mechanisms. The battery taking and placing mechanism can be a separate mechanism set up outside, such as an extending mechanism set up inside the electric vehicle or a transfer mechanism inside the charging compartment, where the overturning mechanism only needs to be aligned to achieve the transfer of the battery pack. The battery taking and placing mechanism can also be a separate moving transport mechanism responsible for moving the battery pack between the overturning mechanism, the charging compartment and the vehicle to be charged.

Preferably, controlling the taken-out insufficient electricity battery pack to overturn from the first position along the first direction to the second position comprising:
Determining whether the battery pack is at the first position;
If yes, then controlling the overturning mechanism to overturn the insufficient electricity battery pack in the first direction;
Determining whether the battery pack has reaches the second position;
If yes, then controlling the overturning mechanism to stop overturning the insufficient electricity battery pack.

Preferably, the overturning mechanism comprises a first overturning part and a second overturning part, the first overturning part is used for bearing the battery pack at the first position or the fourth position, the second overturning part for bearing the battery pack at the second position or the third position, the first overturning part and the second overturning part being set perpendicular to each other.

The first overturning part and the second overturning part respectively realize the bearing of the battery pack at different positions, and correspond to take and place the battery pack at one side of the electric vehicle and one side of the charging compartment respectively. Wherein, the first overturning part is docked to the electric vehicle for taking and placing battery pack, and the second overturning section is docked to the charging compartment for taking and placing battery pack.

Preferably, the overturning mechanism includes the first overturning part, the second overturning part, the first overturning part is used to bear the battery pack at the first position or the fourth position, the second overturning part is used to bear the battery pack in the second position or the third position , wherein the battery swapping method further comprises:
Detecting whether the first overturning part and the second overturning part are rotated in place, and if they are rotated in place, starting to move the battery pack, and if they are not rotated in place, continuing to rotate;
And/or detecting whether the battery pack moves in place on the first overturning part or the second overturning part, and if it does, start rotating the first overturning part or the second overturning part, and if it does not move in place, continue moving.

Preferably, the charging compartment is provided with a floating dish bearing the battery, an electrical connector for forming an electrical connection with the battery pack to charge and discharge the battery pack, and placing the insufficient electricity battery pack at the second position into the charging compartment for charging comprising:
Moving the insufficient electricity battery pack into the floating dish in the charging compartment;
Controlling the movement of the electrical connector in the direction towards the insufficient electricity battery pack and forming the electrical connection.

This solution uses the gravity of the battery pack to make the floating dish move, and by setting the linkage mechanism between the floating dish and the electrical connector, which in turn drives the electrical connector to move in the direction towards the battery pack to form an electrical connection, i.e., the electrical connection is realized by using the gravity of the battery pack itself, and no additional power is needed to drive the electrical connector to move, and this linkage can be applied to the electrical connection of multiple orientations of the battery pack.

Preferably, a linkage mechanism is provided between the floating dish and the electrical connector, the floating dish can float up and down under the gravity of the battery pack, the linkage mechanism is used to drive the electrical connector in the direction close to the battery or away from the battery when the floating dish floats up and down; placing the insufficient electricity battery pack at the second position into the charging compartment for charging comprising:
Placing the insufficient electricity battery pack on the floating dish in the charging compartment and align the electrical connector head of the battery pack with the electrical connector;
The floating dish floats downward a first displacement under the gravity of the battery;
The linkage mechanism drives the electrical connector to move a second displacement in the direction close to the battery pack and forms the electrical connection with the battery pack.

The first floating direction is vertical downward, that is, the gravity of the battery pack can be fully applied to the floating dish, so that the floating dish can drive the movement of the linkage mechanism in a timelier manner.

Preferably, the floating dish is provided with a reset element, and taking out the full electricity battery pack from the charging compartment and placing it at the third position comprises:
Moving the full electricity battery pack out of the floating dish in the charging compartment and placing it at the third position of the overturning mechanism;
The floating dish floats upwards in the first displacement under the action of the reset element;
The linkage mechanism drives the electrical connector to move a second displacement in the direction away from the battery pack and separate it from the battery pack.

Preferably, the second displacement is greater than the first displacement.

Preferably, linkage mechanism comprises a sliding mechanism, a first traction member and a second traction member, the first traction member being connected to the sliding mechanism and the floating dish respectively, the second traction member being connected to the electrical connector and a mount respectively, the electrical connector being mounted on the mount and moving relative to the mount, the second traction member is sliding connected to the sliding mechanism.

This constitutes the structure of the movable pulley. Wherein, the moving distance of the second traction member is twice that of the first traction member, thereby realizing that the second displacement is greater than the first displacement.

Preferably, placing the insufficient electricity battery pack at the second position into the charging compartment for charging comprising:
moving the insufficient electricity battery pack into the floating dish in the charging compartment;
the first traction member is driven by the floating dish and pulls the sliding mechanism;
the second traction member is driven by the sliding mechanism and pulls the electrical connector;
the electrical connector moves in the direction towards the insufficient electricity battery pack and forms the electrical connection.

Preferably, taking out the full electricity battery pack from the charging compartment comprises:
taking out the full electricity battery pack from the floating dish in the charging compartment;
the floating dish floats upwards in the first displacement under the action of the reset element;
the first traction member and the second traction member follow the floating dish and the electrical connector to produce movement;
the electrical connector moves the second displacement in the direction away from the battery pack and separates from the battery pack.

Preferably, moving the battery pack towards the charging compartment or the electric vehicle when the battery pack is rotated or the electric vehicle; or moving the battery pack towards the charging compartment or the electric vehicle after rotating the battery pack; or before rotating the battery pack, moving the battery pack in the direction of the charging compartment or the electric vehicle.

The positive progressive effect of the present invention is that less space is required for the overturning of the battery pack itself in the present invention, and the overturning mechanism can be significantly reduced in structure relative to the planar rotating battery swapping device. As a result, the battery swapping method of the present invention is able to accomplish the taking and placing of larger battery packs in charging stations in a smaller space and structure. This will simplify the battery swapping process and increase the speed of the swapping. It also enables battery swapping for electric vehicles with a single large battery pack in a battery swapping station having a small occupied area, thus reducing the cost of the battery pack and facilitating popularization.

### Brief description of the drawings

Fig. 1 shows a flow chart of the battery swapping method of Embodiment 1 of the present invention.
Fig. 2 shows the overall structure of the battery swapping device of Embodiment 1 of the present invention.
Fig. 3 shows the structure of the battery swapping device of Embodiment 1 of the present invention after turning 90 degrees.
Fig. 4 shows the bottom structure of the battery swapping device of Embodiment 1 of the present invention.
Fig. 5 shows the structure of the charging device within the charging assembly of Embodiment 1 of the present invention.
Fig. 6 shows a schematic diagram of the structure of the charging assembly of Embodiment 1 of the present invention.
Fig. 7 shows a schematic diagram of the arrangement and setting of the charging device of Embodiment 1 of the present invention.
Fig. 8 shows the structure of the charging station of Embodiment 1 of the present invention.

### Detailed description of the preferred embodiment

The following examples further illustrate the present disclosure, but the present disclosure is not limited thereto.

### Embodiment 1

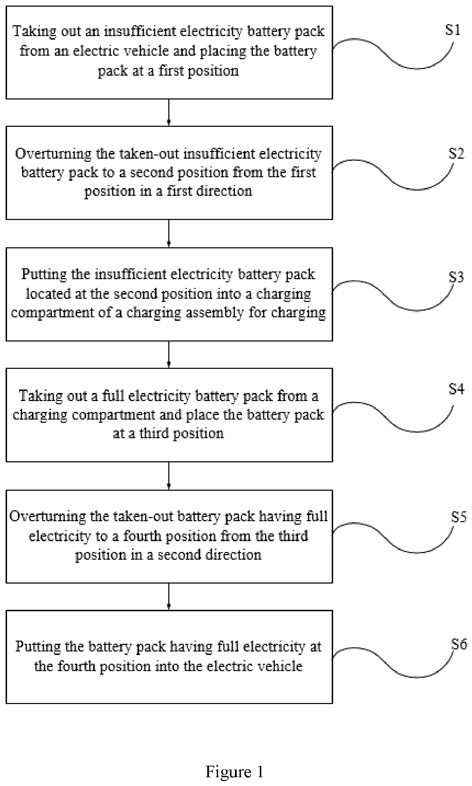

As shown in Fig. 1, this embodiment discloses a battery swapping method, the battery swapping method comprising:
Step S 1, taking out an insufficient electricity battery pack 4 from an electric vehicle 3 and placing the battery pack at a first position;
Step S2, overturning the taken-out insufficient electricity battery pack 4 to a second position from the first position in a first direction;
Step S3, putting the insufficient electricity battery pack 4 located at the second position into a charging compartment A of a charging assembly 2 for charging;
Step S4, taking out a full electricity battery pack 4 from a charging compartment A and place the battery pack at a third position;
Step S5, overturning the taken-out battery pack 4 having full electricity to a fourth position from the third position in a second direction;
Step S6,placing the battery pack 4 having full electricity located at the fourth position into the electric vehicle 3.

The battery swapping method in this embodiment is applicable to swapping and transferring the battery pack 4 on the electric vehicle 3 in the swapping station, and the charging compartment A is provided with a charging assembly 2 to charge the insufficient electricity battery pack 4 taken out from the electric vehicle 3, and stores a full electricity battery pack 4 for the electric vehicle 3 to continue to use. The battery swapping station is usually provided with a battery swapping device, which has both the battery taking and placing function and the battery transferring function, that is, the battery swapping device can take and place the battery from the electric vehicle 3 and the charging compartment A, and it can also transfer the insufficient electricity battery pack 4 from the electric vehicle 3 to the charging compartment A and transfer the full electricity battery pack 4 from the charging compartment A to the electric vehicle 3. In other embodiments, battery swapping device can only have the battery transferring function, and a separate battery taking and placing mechanism performs the action of taking and placing the battery from the electric vehicle 3 and the charging compartment A.

In this embodiment, in order to realize the overturning of the battery pack 4, the battery swapping device is provided with an overturning mechanism 10, wherein the first position is the initial position of the insufficient electricity battery pack 4 taken out from the electric vehicle on the overturning mechanism 10, and the first position usually corresponds to the battery pack 4 on the electric vehicle 3. The second position is the position of the insufficient electricity battery pack 4 on the turnover mechanism 10 after overturning in the first direction, and the second position usually corresponds to the compartment on the charging compartment A for placing the insufficient electricity battery pack 4. The third position is the initial position of the full electricity battery pack 4 taken out from the charging compartment A on the overturning mechanism 10, and the fourth position is the position of the full electricity battery pack 4 on the turning mechanism 10 after overturning in the second direction. Wherein the insufficient electricity battery pack 4 does not refer to the battery pack 4 with 0 power, but includes the situation where the remaining charge of the battery pack 4 is not enough for the electric vehicle 3 to continue driving, and the full electricity battery pack 4 is not the battery pack 4 with a charge of 100%, but includes a situation where the charge of the battery pack 4 is sufficient to continue driving the electric vehicle 3.

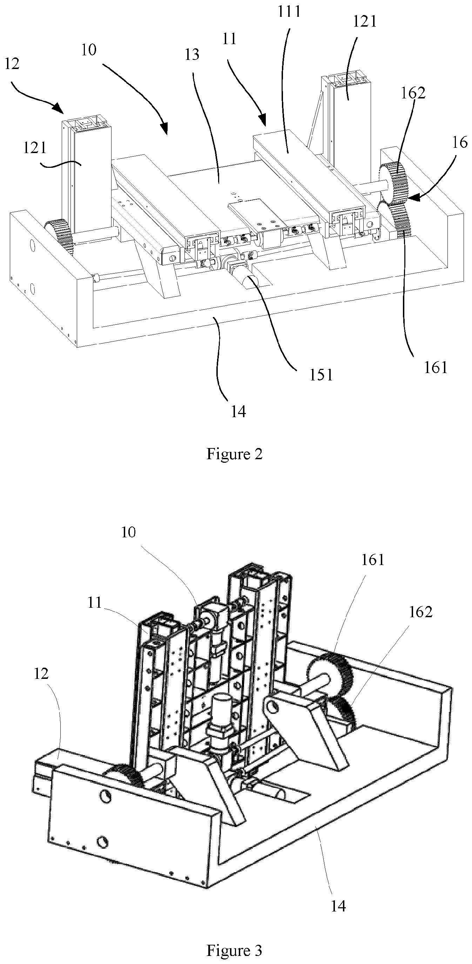

Wherein the first position and the fourth position may be the same position, and the second position and the third position may be the same position. As shown in Fig. 2 and Fig. 3, this embodiment makes the first position and the fourth position as the same position, i.e., the initial position of the insufficient electricity battery pack 4 on the overturning mechanism 10 and the position of the full electricity battery pack 4 on the overturning mechanism 10 after overturning in the second direction are the same position; the position of the insufficient electricity battery pack 4 on the overturning mechanism 10 after overturning in the first direction is the same position as the initial position of the full electricity battery pack 4 on the overturning mechanism 10 after being taken out from the charging compartment A. Thus the overturning switch of the overturning mechanism 10 is mainly between two overturning states.

Using the overturning mechanism 10 in this example, the battery pack 4 is overturned during the transfer of the battery pack 4 between the electric vehicle 3 and the charging compartment A to accommodate situations where the electrical connectors in the electric vehicle 3 and the charging compartment A are facing different directions.

The method of overturning is used in the present invention to rotate the battery pack 4. The battery pack 4 itself requires less space to overturn, and the overturning mechanism 10 can be significantly reduced in structure relative to the planar rotating battery swapping device 1. As a result, the battery swapping method of the present invention is able to accomplish the taking and placing of larger battery packs 4 in charging stations with less space and structure. This simplifies the battery swapping process and increases the speed of battery swap. It also enables battery swapping for electric vehicles 3 with a single large battery pack 4 in a swapping station with smaller floor area, thus reducing the cost of the battery pack 4 and facilitating popularization.

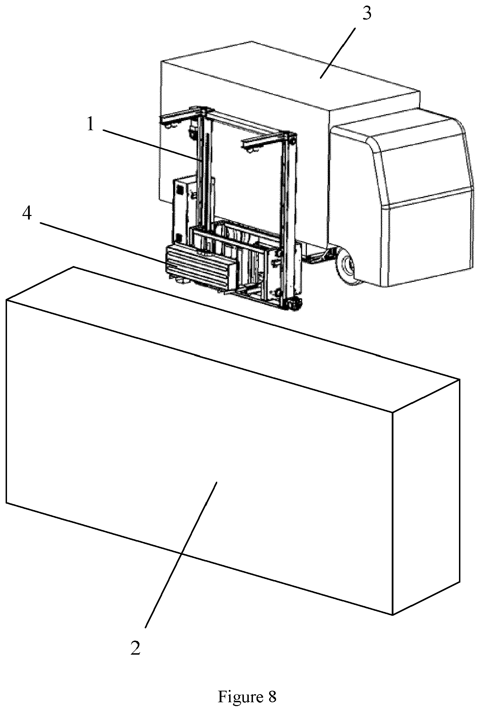

The structure of the battery swapping device 1 and the charging assembly 2 (including the charging device 20) that can be used to implement the present battery swapping method is shown in Fig. 2-Fig. 8. However, the realization of the present battery swapping method is not limited to the battery swapping device 1 and the charging assembly enumerated in this embodiment, but also other realized device.

In this embodiment, the battery swapping method is achieved by providing a overturning mechanism 10 for overturning an insufficient electricity battery pack 4 or a full electricity battery pack 4, wherein,

Taking out the insufficient electricity battery pack 4 from the electric vehicle 3 and placing it at a first position, comprising: taking out the insufficient electricity battery pack from the electric vehicle 3 and placing it at the first position on the overturning mechanism 10;

Or, taking out the full electricity battery pack 4 from charging compartment A and placing it at the third position, comprising: taking out a full electricity battery pack 4 from charging compartment A and placing it at the third position on the overturning mechanism 10.

In this embodiment, by providing an extending mechanism on the overturning mechanism 10 for taking and placing the battery pack 4 on the electric vehicle 3 or charging compartment A;

Taking out an insufficient electricity battery pack 4 from the electric vehicle 3 and placing it at the first position comprising: controlling the extending mechanism to extend towards the direction of the electric vehicle 3; controlling the extending mechanism to lift the insufficient electricity battery pack 4 in the electric vehicle 3; and controlling the extending mechanism to draw back so that the insufficient electricity battery pack 4 reaches the first position on the overturning mechanism 10;

Or, taking out the full electricity battery pack 4 from the charging compartment A and placing it at the third position comprising: controlling the extending mechanism to extend towards the direction of the charging compartment A; controlling the extending mechanism to lift the full electricity battery pack 4 in the charging compartment A and controlling the extending mechanism to draw back so that the full electricity battery pack 4 reaches the third position on the overturning mechanism 10;

The step of aligning with the battery pack 4 on the electric vehicle 3/ the charging compartment A is also included before controlling the extending mechanism to extend towards the direction of the electric vehicle. Wherein, a detection device such as a sensor or a guided mechanical structure enables the extending mechanism to align with the battery pack 4 at a spatial position before moving to extend towards the battery pack 4 on the electric vehicle 3/charging compartment A. In other embodiments, the battery pack 4 can also be taken out from the electric vehicle 3 or charging compartment A and placed at the first or third position by a separate battery taking and placing mechanism.

In this embodiment, controlling the taken out insufficient electricity battery pack 4 to overturn from the first position to the second position in the first direction comprising:
Determining whether the battery pack 4 is at the first position by a detection device such as a sensor or limit switch located on the overturning mechanism 10, wherein the sensor or limit switch may be provided on the first overturning mechanism 11, and the battery pack 4 triggers the in place signal after moving in place on the first overturning mechanism 11;
If yes, the overturning mechanism 10 is controlled to overturn the insufficient electricity battery pack 4 in the first direction, wherein, in this embodiment, the overturning mechanism 10 is controlled to perform rotation along the first direction by controlling the rotation of the overturning motor 157 and the drive of the gear set 16. When the gears of the gear set are an even number of gears, the overturning motor 157 rotates in the opposite direction of the first direction to cause the overturning mechanism 10 to rotate in the first direction; when the number of gears of the gear set is an odd number, the overturning motor 157 rotates in the first direction to cause the overturning mechanism 10 to rotate in the first direction;
Determining whether the battery pack 4 reaches the second position by a detection device such as a sensor or limit switch located on the overturning mechanism 10, wherein the sensor or limit switch may be provided on the second overturning mechanism 12 and the battery pack 4 triggers a position signal after moving in place on the second overturning mechanism 12;
If yes, then controlling the overturning mechanism 10 to stop overturning the insufficient electricity battery pack 4.

Controlling the overturning of the takenout full electricity battery pack 4 from the third position in the second direction to the fourth position comprising :
Determining whether the battery pack 4 is at the third position by a detection device such as a sensor or limit switch located on the overturning mechanism 10, wherein the sensor or limit switch may be provided on the second overturning mechanism 12 and the battery pack 4 triggers a position signal after moving in place on the second overturning mechanism 12;
If yes, the overturning mechanism 10 is controlled to overturn the insufficient electricity battery pack 4 in the second direction, wherein in this embodiment, the overturning mechanism 10 is controlled to perform the rotation along the second direction by controlling the rotation of the overturning motor 157 and by the drive of the gear set 16. When the gear set has an even number of gears, the overturning motor 157 rotates in the opposite direction of the second direction to cause the overturning mechanism 10 to rotate in the second direction; when the gear set has an odd number of gears, the overturning motor 157 rotates in the second direction to cause the overturning mechanism 10 to rotate in the second direction;
Determining whether the battery pack 4 has reached the fourth position by a detection device such as a sensor or limit switch located on the overturning mechanism 10, wherein the sensor or limit switch may be provided on the first overturning mechanism 11, and the battery pack 4 triggers the position signal after moving in place on the first overturning mechanism 11;
If yes, then controlling the overturning mechanism 10 to stop overturning the insufficient electricity battery pack 4.

In this embodiment, the overturning mechanism comprises a first overturning part 11 and a second overturning part 12, the first overturning part 11 is used for bearing the battery pack 4 at the first position or the fourth position, the second overturning part 12 is used for bearing the battery pack 4 at the second position or the third position, the first overturning part 11 and the second overturning part 12 being set perpendicular to each other. The first overturning part 11 and the second overturning part 12 respectively realize the bearing of the battery pack 4 at different positions, and correspond to take and place the battery pack 4 at one side of the electric vehicle 3 and one side of the charging compartment A respectively. Wherein, the first overturning part 11 is docked to the electric vehicle 3 while facing the first position and the fourth position to realize the taking and placing of the battery pack 4, and the second overturning part 12 is docked to the charging compartment A and causes the battery pack 4 to move from the second position to the charging compartment A, or from the charging compartment A to the third position to realize the taking and placing of the battery pack 4. The docking between the first turning part and the electric vehicle in this embodiment is not exactly aligned, and may include having a certain gap or deviation, by moving the overturning mechanism as a whole in order to achieve alignment with the electric vehicle. The docking between the first turning part and the charging chamber in this embodiment is not exactly aligned, and may include having a certain gap or deviation, by moving the overturning mechanism as a whole in order to achieve alignment with the charging compartment.

In this embodiment, preferably, the first overturning part 11 keeps the battery pack 4 horizontal at the first position and the fourth position when docked to the electric vehicle 3. The second overturning part 12 keeps the battery pack 4 horizontal in the second and third positions when docked to the charging assembly 2.

In this embodiment, the overturning mechanism 10 includes the first overturning part 11, the second overturning part 12, the first overturning part 11 is used to bear the battery pack 4 at the first position or the fourth position, the second overturning part 12 is used to bear the battery pack 4 at the second position or the third position, the first overturning part 11 and the second overturning part 12 are co-axially overturned, wherein,

Detection points are provided on the rotation axis of the first overturning part 11 and the second overturning part 12 for controlling the overturning angle of the first overturning part 11 and the second overturning part 12 to determine whether the battery pack 4 is in place; or detection sensors are provided on the first overturning part 11 and the second overturning part 12 for detecting whether the battery pack 4 is in place.

The battery swapping method further comprises: detecting whether the first overturning part 11 and the second overturning part 12 are rotated in place, and if they are rotated in place, starting to move the battery pack 4, and if they are not rotated in place, continuing to rotate;
And/or detecting whether the battery pack 4 moves in place on the first overturning part 11 or the second overturning part 12, and if it does, start rotating the first overturning part 11 or the second overturning part 12, and if it does not move in place, continue moving.

As shown in Fig. 2-Fig. 4, the first overturning part 11 of this embodiment includes a first extending mechanism 111 and the second overturning part 12 includes a second extending mechanism 121. The first extending mechanism 111 and the second extending mechanism 121 can extend. Wherein, the first extending mechanism 111 moves the battery pack 4 in the electric vehicle 3 to the first position or moves the battery pack 4 at the fourth position to the electric vehicle 3, and the second extending mechanism 121 moves the battery pack 4 at the second position to the charging assembly 2 or moves the battery pack 4 from the charging assembly 2 to the third position. Wherein, the first extending mechanism 111 is docked to the electric vehicle 3 for taking and placing the battery pack 4. The second extending mechanism 121 is docked to the charging compartment A for taking and placing the battery pack 4.

As shown in Fig. 2-Fig 4, the first overturning part 11 of this embodiment includes a first extending mechanism 111 and the turntable 13, and the second overturning part 12 includes a second overturning part 121 and the turntable 13. Wherein, the turntable 13 in this embodiment is the part shared by the first overturning part 11 and the second overturning part 12. It is also understood that the first overturning part 11 includes the first extending mechanism 111 and the turntable 13, and the second overturning part 12 only includes the second extending mechanism 121; or it is understood that the first overturning part 11 only includes the first extending mechanism 111, and the second overturning part 12 includes the second extending mechanism 121 and the turntable 13.

The bottom of the turntable 13 is connected to the output gear 162 by a spindle 163. Therefore, the turntable 13 is rotated together when the rotation is performed. Meanwhile, the first overturning part 11 and the second overturning part 12 achieve simultaneous overturning.

As shown in Fig. 2-Fig 4, the extending direction of the first extending mechanism 111 and the extending direction of the second extending mechanism 121 intersect to allow the battery pack 4 to be relayed between the first extending mechanism 111 and the second extending mechanism 121. The battery pack 4, after being transported to the end on the first extending mechanism 111, naturally contacts the second extending mechanism 121 at the first position. After being turned over to the second position, the second extending mechanism 121 carries the battery pack 4 for transport. Conversely, the battery pack 4 naturally contacts the first extending mechanism 111 in the third position after being transported to the end on the second extending mechanism 121. After being turned over to the fourth position, the first extending mechanism 111 carries the battery pack 4 for transport.

When taking out the battery, after the first extending mechanism 111 takes out the battery pack from the electric vehicle 3, it retracts and places the battery pack 4 at the first position on the first overturning part 11, and after driving the overturning mechanism to overturn 90 degrees in the first direction, the battery pack 4 is located in the second position on the second overturning part 12, the second extending mechanism 121 extends to send the battery pack 4 located at the second position into the corresponding charging compartment A, and the second extending mechanism 121 retracts to the initial position. When changing on the battery, move the battery swapping device 1 to the charging compartment A where the full electricity battery pack 4 is placed, the second extending mechanism 121 extends to take out the full electricity battery pack 4 in the charging compartment, draws back and places the battery pack 4 at the third position on the second overturning part 12, and after driving the overturning mechanism 10 to overturn 90 degrees in the second direction, the battery pack 4 is located in the fourth position on the first overturning part 11, the first extending mechanism 121 sends the battery pack 4 located at the fourth position into the electric vehicle 3, and the first extending mechanism 121 draws back to the initial position.

In this embodiment, the first extending mechanism 111 and the second extending mechanism 121 are both telescopic forks. The telescopic fork can be any existing device that can achieve lengthwise telescoping. The first extending mechanism 111 and the second extending mechanism 121 in this embodiment are track structures that can be extended internally by electromagnetic force, pulleys, sprockets or gears and other structures. Wherein, drive shaft 153 and drive shaft 156 are connected to the internal structure of first extending mechanism 111 and second extending mechanism 121 respectively. During operation, the rotation generated by the drive shaft 153 and the drive shaft 156 becomes the extending and drawing back motion of the first extending mechanism 111 and the second extending mechanism 121 by electromagnetic force, pulley, sprocket, or gear, and other structures.

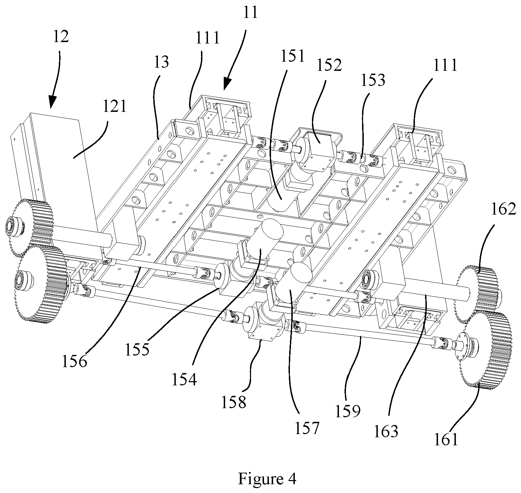

As shown in Fig. 2 and Fig. 4, the battery swapping device 1 of this embodiment also includes a first transmission motor 151 and a second transmission motor 154 respectively with the first transmission motor 151 and the second transmission motor 154 both connected to the underside of the turntable 13. Wherein, the first transfer motor 151 directly or indirectly drives the first extending mechanism 111 and the second transfer motor 154 directly or indirectly drives the second extending mechanism 121. Wherein, as shown in Fig. 4, the first transfer motor 151 is connected to the drive shaft 153 through the commutator 152, thereby driving the movement of the first extending mechanism 111. The second transfer motor 154 is connected to the drive shaft 156 via the commutator 155, thereby driving the movement of the second extending mechanism 111. Among them, the interior of the commutator 152 and commutator 155 can be a structure such as a bevel gear, which switches the motion axes of the first transmission motor 151 and the second transmission motor 154 by 90 degrees, and then drives the first extending mechanism 111 and the second extending mechanism 121 through the drive shaft 153 and the drive shaft 156.

In this embodiment, the battery swapping device 1 further includes a limit sensor, and the limit sensor can be a limit switch or a distance sensor, etc. Among them, the limit sensor can be provided in the non-moving part of the first extending mechanism 111 to detect the moving distance or position of the moving part of the first extending mechanism, and the limit sensor can also be provided on the turntable 13 to detect the moving distance or position of the moving part of the first extending mechanism. The limit sensor is used to detect the extending distance of the first extending mechanism 111 and the second extending mechanism 121, and adjust the extending distance of the first extending mechanism 111 and the second extending mechanism 121 by the first transmission motor 151 and the second transmission motor 154 respectively. For example, when the detected extension distance of the first extension mechanism 111 is less than the set distance, it makes the first transmission motor 151 continue to rotate to reach the preset position, thus realizing a closed-loop control to ensure that the first extending mechanism 111 and the second extending mechanism 121 are precisely in place.

In this embodiment, the power change device 1 also includes a overturning-in-place sensor, the overturning-in-place sensor is used to detect the overturning angle of the first overturning part 11 and the second overturning part 12, and adjust the overturning angle of the first overturning part 11 and the second overturning part 12 by the overturning motor 157. Overturning-in-place sensors can be limit switches, angle sensors, scales, etc. Wherein, the overturning-in-place sensor can be provided at the base 14 to detect the overturning angle of the turntable 13, so as to obtain the overturning angle of the first overturning part 11 and the second overturning part 12. For example, when the detected turntable 13 is less than the set overturning angle, it makes the overturning motor 157 continue to rotate to reach the preset position, thus achieving closed-loop control and ensuring the precise placement of the first overturning part 11 and the second overturning part 12.

As shown in Fig. 2 and Fig. 4, the overturning drive device of this embodiment includes a overturning motor 157 and a gear set 16, wherein the gear set 16 at least includes a input gear 161 and a output gear 162, and the input gear 161 and the output gear 162 are intermeshed, wherein the overturning motor 157 directly or indirectly drives the rotation of the input gear 161, and the first overturning part 11 and the second overturning part 12 are fixedly connected to the output gear 162 by the overturning shaft and rotate with the output gear 162. The input gear 161 and the output gear 162 can be directly output or driven by other gears. Wherein, the overturning motor 157 is connected to the drive shaft 159 through the commutator 158, thereby driving the gear set 16 to rotate.

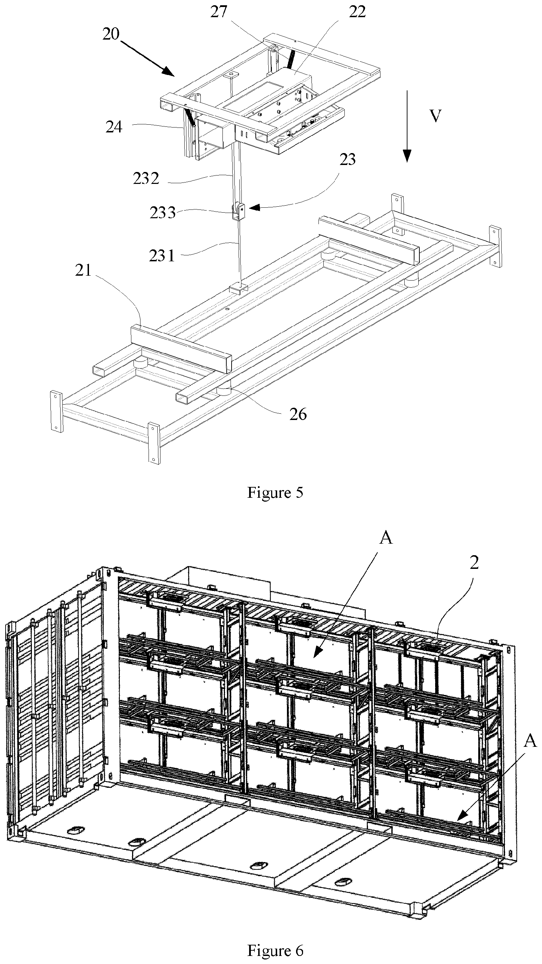

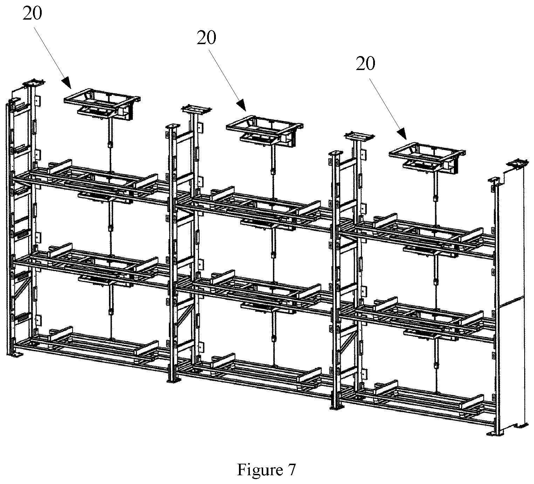

As shown in Fig. 6 and Fig. 7, charging device 20 is provided in charging compartment A. As shown in Fig.5, the charging device 20 includes a floating dish 21 bearing the battery, an electrical connector 22 for forming an electrical connection with the battery pack 4 to charge and discharge the battery pack 4. In this embodiment, the floating dish 21 can be a flat plate structure, frame structure or other structural members that can be used to support the battery pack and can float in the first direction, the charging assembly 2 also includes a fixed dish 28, set below the floating dish 21, for supporting the bearing floating dish 21, the charging compartment A consists of a charging rack, the charging rack consists of a plurality of horizontal and vertical beams, the floating dish 21 can also be set directly on the charging rack.

As shown in Fig. 6 and Fig. 7, the charging device 20 of this embodiment further includes an electrical connector 22 for forming an electrical connection with the battery pack 4 to charge and discharge the battery pack 4. In this embodiment, the electrical connector 22 is located above the floating dish 21 in the charging compartment A, which can be electrically plugged in the vertical direction with the battery pack 4 to charge and discharge the battery pack, and the electrical connector 22 can be directly set on the crossbeam of the charging frame through the mount, and the electrical connector 22 includes a charging head 221 and a terminal (not shown in the figure, which can actually be located on the top or side of the electrical connector 22), the charging head 221 is used to form an electrical connection with the charging port of the battery pack 4, and the terminal is used to connect an external charging module to charge the battery pack 4.

Placing a insufficient electricity battery pack 4 in the second position into charging compartment A for charging includes:
Moving the insufficient electricity battery pack 4 into the floating dish 21 in the charging compartment A;
Controlling the electrical connector to move in the direction of the insufficient electricity battery pack 4 and form an electrical connection.

As shown in Fig. 5, the floating dish 21 is provided with a linkage mechanism 23 between the floating dish 21 and the electrical connector 22, and the floating dish 21 can float up and down under the gravity of the battery pack 4. The electrical connector 22 slides onto the mount 24 and is mounted in the charging compartment A through the mount 24. As shown in Fig. 3, the charging device 20 of this embodiment further includes a linkage mechanism 23, which is connected to the floating dish 21 and the electrical connector 22 respectively, and when the floating dish 21 produces a first displacement along the first floating direction V, the linkage mechanism 23 drives the electrical connector 22 to move a second displacement in the direction close to the battery pack 4 to cause the electrical connector 22 to form an electrical connection with the battery pack 4.

This embodiment uses the gravity of the battery pack 4 to make the floating dish 21 move, and by setting the linkage mechanism 23 between the floating dish 21 and the electrical connector 22, which in turn drives the electrical connector 22 to move in the direction of the battery pack 4 to form an electrical connection, i.e., the electrical connection is realized by using the gravity of the battery pack 4 itself, and no additional power is needed to drive the electrical connector 22 to move, and this linkage can be applied to the electrical connection of multiple orientations of the battery pack 4.

The electrical connector 22 of the present invention is linked by the linkage mechanism 23 thereby docking with the battery pack 4, and is no longer a fixed electrical connector 22, whereby the moving electrical connector 22 does not need to be in the same direction of transmission as the battery pack 4, and the orientation of the electrical connector 22 can be in any orientation. Wherein, the linkage mechanism 23 is linked by a change in the load of the floating dish 21, whereby the electrical connector 22 can respond and dock with the battery pack 4 in a timely manner. The electrical connector 22 moves powered by the gravity of the battery pack 4 and does not require an external drive, which helps to simplify the internal structure of the charging device 20.

As described above, the linkage mechanism is used to drive the electrical connector 22 in a direction close to the battery or away from the battery as the floating dish 21 floats up and down; placing the insufficient electricity battery pack 4 at the second position into the charging compartment A for charging includes:
The second extending mechanism 121 places the insufficient electricity battery pack 4 from the third position on the floating dish 21 in the charging compartment A and aligns the electrical connector head of the battery pack 4 with the electrical connector 22;
The floating dish 21 floats downward a first displacement under the gravity of the battery pack 4;
The linkage mechanism 23 drives the electrical connector 22 to move a second displacement in the direction close to the battery pack 4 and form an electrical connection with the battery pack 4.

Wherein, taking out the full electricity battery pack 4 from charging compartment A comprises:
The second extending mechanism 121 is aligned to move the full electricity battery pack 4 out of the floating dish 21 in the charging compartment A and into the fourth position;
The floating dish 21 floats upwards in first displacement by the action of the reset element 26.

The linkage mechanism 23 drives the electrical connector 22 and moves a second displacement in the direction away from the battery pack 4 in conjunction with the reset element 27 and separates from the battery pack 4.

When the battery pack 4 is installed on the electric vehicle, the battery pack 4 and the electric connector 22 on the electric vehicle generally complete the electric plugging along the horizontal direction, the horizontal electric plugging is suitable for the electric vehicle in the process of driving, especially in the case of violent shaking of the vehicle, in order to provide a reliable and stable electric connection, while the battery pack 4 on the electric vehicle is unloaded and connected with the electric connector located in the charging compartment in the horizontal direction on the inside to achieve charging and discharging, the battery pack needs to be rotated 180 degrees horizontally to dock the electrical connector in the charging compartment, which requires a large space for battery pack with large size and is not suitable for the situation where the changing area is small. Using the electrical connector 22 above the floating dish in this embodiment, charging and discharging can be achieved by simply turning the battery pack 4 of 90 degrees in the vertical direction, without occupying a large space for battery swapping. At the same time, using the gravity of the battery pack 4 to achieve the electrical connection between the battery pack 4 and the electrical connector 22, eliminating the need for an additional drive mechanism, placing the battery pack in place on the floating dish to achieve the electrical connection between the two, eliminating the need for complex operations between the electrical connector and the battery pack alignment, higher charging docking efficiency and lower charging costs.

In other embodiments, the electrical connector 22 may also be adaptively located on the side or bottom of the charging compartment to accommodate different orientations of the socket end of the battery pack 4 placed in the charging compartment A. Specifically, the linkage mechanism 23 in this embodiment can be used to adjust only the setting position of the electrical connector 22 and to move the electrical connector 22 in the direction toward the proximity of the battery under the gravity of the battery pack 4.

Preferably, the linkage mechanism includes a sliding mechanism 233, a first traction member 231 and a second traction member 232, the first traction member 231 is connected to the sliding mechanism 233 and the floating dish 21 respectively, the second traction member 232 is connected to the electrical connector 22 and the mounting base 24, the electrical connector 22 is mounted on the mounting base 24 and moved relative to the mounting base 24, and the second traction member 232 is sliding connected to the sliding mechanism 232.

The linkage mechanism 23 of this embodiment includes a sliding mechanism 233, a first traction member 231 and a second traction member 232, the first traction member 231 is connected to the sliding mechanism 233 and the floating dish 21 respectively, the second traction member 232 is connected to the electrical connector 22 and the mounting base 24, the electrical connector 22 is mounted on the mounting base 24 and moved relative to the mounting base 24, and the second traction member 232 is sliding connected to the sliding mechanism 233. This forms the structure of the dynamic pulley.

The first traction member 231 and the second traction member 232 can be wire rope, belt and other structures. The sliding mechanism 233 can be a structure such as a pulley or a slider. The second traction member 232 slides underneath the sliding mechanism 233, wherein the second traction member 232 not only has sliding relative to the sliding mechanism 233, but also moves up and down together with the sliding mechanism 233. The first traction member 231 is then fixed directly to the sliding mechanism 233 and therefore moves together with respect to the sliding mechanism 233. Wherein, thus, regardless of the direction of movement, the distance of movement of the second traction member 232 includes the sliding distance relative to the sliding mechanism 233 and the distance that follows the sliding mechanism 233, while the first traction member 231 includes only the distance that moves with the sliding mechanism 233, so that the distance of movement of the second traction member 232 is twice that of the first traction member 231. At the same time, one of the ends of the second traction member 232 is connected to the mount 24 to remain fixed without moving, so that the electrical connector 22 connected to the other end of the second traction member 232 achieves twice the distance of movement with respect to the first traction member 231, thus achieving a second displacement greater than the first displacement.

Placing an insufficient electricity battery pack 4 at the second position into charging compartment A for charging includes:
The second extending mechanism 121 moves the insufficient electricity battery pack 4 from the third position into the floating dish 21 in the charging compartment A;
the first traction member 231 is driven by the floating dish 21 and pulls the sliding mechanism 233 downwards together;
While the second traction member 232 is driven downward by the sliding mechanism 233, it slides with the sliding mechanism 233 itself. One end of the second traction member is fixed and the other end pulls the electrical connector 22 to achieve twice the distance of movement with respect to the floating dish 21.

The electrical connector 22 moves in the direction of the insufficient electricity battery pack 4 and forms an electrical connection.

Taking out a full electricity battery pack 4 from charging compartment A includes:
The second extension mechanism 121 moves the fully charged battery pack 4 out of the floating dish 21 in the charging compartment A and to the fourth position;
The floating dish 21 floats upwards in first displacement by the action of the reset element 26.

At this point, the first traction member 231 and the second traction member 232 are relaxed, so that they move with the floating dish 21 and the electrical connection 22.

The electrical connector 22 moves a second displacement away from the battery pack 4 under the action of the reset element 27 and separates from the battery pack 4. At this time, one end of the second traction member 232 moves upward with the electrical connector 22, and the second traction member 232 slides relative to the sliding mechanism 233 while bearing the sliding mechanism 233 upward with it, and the sliding mechanism 233 pulls upward the upper end of the first traction member 231.

In this embodiment, moving the battery pack 4 in the direction of the charging compartment A or the electric vehicle 3 when the battery pack 4 is rotated; or moving the battery pack 4 in the direction of the charging compartment A or the electric vehicle 3 after rotating the battery pack 4; or before rotating the battery pack 4, moving the battery pack 4 in the direction of the charging compartment A or the electric vehicle 3.

### Example 2

The difference between this embodiment and Embodiment 1 is that this embodiment includes a battery taking and placing mechanism. The battery taking and placing mechanism and the overturning mechanism 10 can be the same or different mechanisms. At this time, instead of taking and placing the battery pack 4 through the first extending mechanism 111 and the second extending mechanism 121, the battery pack 4 is taken and placed through the battery taking and placing mechanism. The battery taking and placing mechanism can be a separate mechanism set on the outside to take out the battery pack from the electric vehicle or charging compartment and place it on the battery swapping device by lifting, clamping the battery pack or lifting the battery pack by the telescopic fork, or to remove the battery pack from the battery swapping device and place it on the electric vehicle or charging compartment, such as the telescopic mechanism set in the electric vehicle 3 or the transfer mechanism in the charging compartment A. At this time the overturning mechanism 10 only needs to be aligned to achieve the transfer of the battery pack 4. The battery take and place mechanism can also be a separate moving transport mechanism responsible for moving the battery pack 4 between the overturning mechanism 10 and the charging compartment A or charging vehicle.

Taking and placing the battery pack 4 from the electric vehicle 3 or the charging compartment A by providing a battery taking and placing mechanism; wherein taking out the insufficient electricity battery pack 4 from the electric vehicle 3 at the first position comprises: controlling the battery taking and placing mechanism to remove the insufficient electricity battery pack 4 from the electric vehicle 3 and to place the insufficient electricity battery pack 4 at the first position on the overturning mechanism 10.

Or, taking out the full electricity battery pack 4 from the charging compartment A and placing it at the third position includes: controlling the battery take and to place mechanism to remove the full electricity battery pack 4 from the charging compartment A and place it at the third position of the overturning mechanism 10.

Less space is required for the overturning of the battery pack itself in the present invention, and the overturning mechanism can be significantly reduced in structure relative to a planar rotating battery swapping device. Therefore, the battery swapping method of the present invention is able to accomplish the taking and placing of larger battery packs in charging stations in a smaller space and structure. This simplifies the battery swapping process and increases the speed of point change. It also enables battery replacement for electric vehicles with a single large battery pack in the swapping station with smaller floor area, thus reducing the cost of the battery pack and facilitating popularization.

Although the specific embodiments of the present invention are described above, a person skilled in the art should understand that this is only an illustration, and the protection scope of the present invention is defined by the appended claims. A person skilled in the art can make various changes or modifications to these embodiments without departing from the principle and essence of the present invention, but these changes and modifications all fall within the protection scope of the present invention.

## Claims

1. A battery swapping method, **characterized in that**, the battery swapping method comprises:
taking out an insufficient electricity battery pack from an electric vehicle and place it at a first position;
overturning the taken-out insufficient electricity battery pack from the first position along a first direction to a second position;
putting the insufficient electricity battery pack located at the second position into the charging compartment for charging, and/or taking out a full electricity battery pack from the charging compartment and place it at a third position;
overturning the taken-out full electricity battery pack from the third position along a second direction to a fourth position;
placing the full electricity battery pack located at the fourth position into the electric vehicle.

2. The battery swapping method as claimed in claim 1, **characterized in that** the battery swapping method realizes the overturning of the insufficient electricity battery pack or the full electricity battery pack by providing an overturning mechanism , wherein,
taking out the insufficient electricity battery pack from the electric vehicle and placing it at the first position comprising: taking out the insufficient electricity battery pack from the electric vehicle and placing it at the first position on the overturning mechanism;
or, taking out the full electricity battery pack from the charging compartment and placing it at the third position comprises: taking out the full electricity battery pack from the charging compartment and placing it at the third position of the overturning mechanism.

3. The battery swapping method as claimed in claim 2, **characterized in that** the battery pack is taken and placed from the electric vehicle or the charging compartment by providing a battery taking and placing mechanism; wherein,
taking out the insufficient electricity battery pack from the electric vehicle at the first position comprising: controlling the battery taking and placing mechanism to remove the insufficient electricity battery pack from the electric vehicle and to place it at the first position on the overturning mechanism;
or, taking out the full electricity battery pack from the charging compartment and placing it at the third position comprises: controlling the battery taking and placing mechanism to remove the full electricity battery pack from the charging compartment and to place it at the third position of the overturning mechanism.

4. The battery swapping method as claimed in claim 2 or 3, **characterized in that** by providing an extending mechanism on the overturning mechanism for taking and placing the battery pack on the electric vehicle or charging compartment; wherein,
taking out the insufficient electricity battery pack from the electric vehicle and placing it at the first position comprising: controlling the extending mechanism to extend towards the direction of the electric vehicle; controlling the extending mechanism to lift the insufficient electricity battery pack in the electric vehicle; and controlling the extending mechanism to draw back so that the insufficient electricity battery pack reaches the first position on the overturning mechanism;
or, taking out the full electricity battery pack from the charging compartment and placing it at the third position comprises: controlling the extending mechanism to extend towards the direction of the charging compartment; controlling the extending mechanism to lift the full electricity battery pack in the charging compartment and controlling the extending mechanism to draw back so that the full electricity battery pack reaches the third position on the overturning mechanism.

5. The battery swapping method as claimed in at least one of claims 2-4, **characterized in that** controlling the taken out insufficient electricity battery pack to overturn from the first position along the first direction to the second position comprising:
determining whether the battery pack is at the first position,
if yes, then controlling the overturning mechanism to overturn the insufficient electricity battery pack in the first direction;
determining whether the battery pack has reached the second position;
if yes, then controlling the overturning mechanism to stop overturning the insufficient electricity battery pack.

6. The battery swapping method as claimed in claim 5, **characterized in that** the overturning mechanism comprises a first overturning part and a second overturning part, the first overturning part is used for bearing the battery pack at the first position or the fourth position, the second overturning part is used for bearing the battery pack at the second position or the third position, the first overturning part and the second overturning part being set perpendicular to each other.

7. The power change method as claimed in claim 5 or 6, **characterized in that** the overturning mechanism comprises the first overturning part and the second overturning part, the first overturning part is used for bearing the battery pack at the first position or the fourth position, and the second overturning part is used for bearing the battery pack at the second position or the third position, wherein the battery swapping method further comprises:
detecting whether the first overturning part and the second overturning part are rotated in place, and starting to move the battery pack if they are rotated in place, or continuing to rotate if they are not;
and/or detecting whether the battery pack moves in place on the first overturning part or the second overturning part, and if it does, start rotating the first overturning part or the second overturning part, or continuing to move if it does not move in place,

8. The battery swapping method as claimed in at least one of claims 2-7, **characterized in that** the charging compartment is provided with a floating dish for bearing the battery and an electrical connector for forming an electrical connection with the battery pack for charging and discharging the battery pack, and placing the insufficient electricity battery pack at the second position into the charging compartment for charging comprising:
moving the insufficient electricity battery pack into the floating dish in the charging compartment;
controlling the movement of the electrical connector in the direction towards the insufficient electricity battery pack and forming the electrical connection.

9. The battery swapping method as claimed in claim 8, **characterized in that** a linkage mechanism is provided between the floating dish and the electrical connector, the floating dish can float up and down under the gravity of the battery pack, the linkage mechanism is used to drive the electrical connector in the direction close to the battery or away from the battery when the floating dish floats up and down; placing the insufficient electricity battery pack at the second position into the charging compartment for charging comprising:
placing the insufficient electricity battery pack on the floating dish in the charging compartment and align the charging port of the battery pack with the electrical connector;
the floating dish floats downward a first displacement under the gravity of the battery;
the linkage mechanism drives the electrical connector to move a second displacement in the direction close to the battery pack and forms the electrical connection with thebattery pack.

10. The battery swapping method as claimed in claim 9, **characterized in that** the floating dish is provided with a reset element, and taking out the full electricity battery pack from the charging compartment and placing it at the third position comprising:
moving the full electricity battery pack out of the floating dish in the charging compartment and placing it at the third position of the overturning mechanism;
the floating dish floats upwards in the first displacement under the action of the reset element;
the linkage mechanism drives the electrical connector to move the second displacement in the direction away from the battery pack and separate it from the battery pack.

11. The battery swapping method as claimed in claim 9 or 10, **characterized in that** the second displacement is greater than the first displacement.

12. The battery swapping method as claimed in at least one of claims 9-11, **characterized in that** the linkage mechanism comprises a sliding mechanism, a first traction member and a second traction member, the first traction member being connected to the sliding mechanism and the floating dish respectively, the second traction member being connected to the electrical connector and a mount respectively, the electrical connector being mounted on the mount and moving relative to the mount, the second traction member is sliding connected to the sliding mechanism.

13. The battery swapping method as claimed in claim 12, **characterized in that** placing the insufficient electricity battery pack at the second position into the charging compartment for charging comprising:
moving the insufficient electricity battery pack into the floating dish in the charging compartment;
the first traction member is driven by the floating dish and pulls the sliding mechanism;
the second traction member is driven by the sliding mechanism and pulls the electrical connector;
the electrical connector moves in the direction towards the insufficient electricity battery pack and forms the electrical connection.

14. The battery swapping method as claimed in claim 12 or 13, **characterized in that** taking out the full electricity battery pack from the charging compartment comprises:
taking out the full electricity battery pack from the floating dish in the charging compartment;
the floating dish floats upwards in the first displacement under the action of the reset element;
the first traction member and the second traction member follow the floating dish and the electrical connector to produce movement;
the electrical connector moves the second displacement in the direction away from the battery pack and separates from the battery pack.

15. The battery swapping method as claimed in at least one of claims 1-14, **characterized in that** moving the battery pack towards the charging compartment or the electric vehicle when the battery pack is rotated; or moving the battery pack towards the charging compartment or the electric vehicle after rotating the battery pack,; or before rotating the battery pack, moving the battery pack in the direction of the charging compartment or the electric vehicle.
